# EUROPÄISCHE PATENTSCHRIFT

(11) **EP 0 476 288 B1**
(45) Veröffentlichungstag und Bekanntmachung des Hinweises auf die Patenterteilung: **26.10.1994**
(21) Anmeldenummer: 91113107.6
(22) Anmeldetag: 03.08.1991
(51) Int. Cl.: B60R 9/04, B60R 19/00

(54) **Dachlastenträger für Kraftfahrzeuge**
Roof-carrier for automotive vehicles
Galerie de toit pour véhicules automobiles

(30) Priorität: 07.09.1990 DE 4028433
(43) Veröffentlichungstag der Anmeldung: 25.03.1992
(73) Patentinhaber: Happich Fahrzeug-Dachsysteme GmbH, D-42285 Wuppertal (DE)
(72) Erfinder: Eicke, Peter, W-5600 Wuppertal 23 (DE)

(56) Entgegenhaltungen:
- DE-A- 3 326 789
- DE-A- 3 516 483
- FR-A- 2 288 667
- FR-A- 2 307 680

## Beschreibung

Die Erfindung bezieht sich auf einen Dachlastenträger für Kraftfahrzeuge.

Die DE-33 26 789 A1 zeigt einen Dachlastenträger der gattungsgemäßen Art. Bei diesem bekannten Dachlastenträger sind zwei sich quer über ein Fahrzeugdach erstreckende Holme vorgesehen, wobei in zumindest zwei Ausnehmungen im Fahrzeugdach ein Befestigungselement einbringbar ist, das über ein Verbindungselement mit einem Holm verbunden ist Die nach unten abgewinkelten Enden eines jeden Holms sind dabei unter Zwischenlage einer Gummileiste gegen das Fahrzeugdach verspannt, wodurch eine Stoßdämpferwirkung hervorgerufen werden soll. Die zur Abstützung der Holmenden eingesetzten Gummileisten vermögen jedoch nur in senkrechter Richtung zur Dachfläche eine stoßdämpfende Wirkung zu entfalten, nicht hingegen in einer parallel zur Dachfläche verlaufenden Richtung.

Neben den Dachlastenträgern nach der DE-33 26 789 A1 mit sich quer über ein Fahrzeugdach erstreckenden Holmen, die jeweils beidendig auf der Dachfläche abgestützt sind, gibt es solche (vgl. DE-35 16 483 A1), die insbesondere bei Kombinationskraftwagen üblich sind und die aus einer Dachgalerie mit daran befestigten oder zu befestigenden Querträgern bestehen. Eine Dachgalerie besteht üblicherweise aus zwei sich im wesentlichen in Fahrtrichtung erstreckenden, zumindest annähernd parallel verlaufenden Dachrelings, die jeweils aus mindestens zwei sich auf der Dachhaut eines Fahrzeugs abstützenden am Dachholm des Fahrzeugs mittels die Dachhaut durchsetzenden Befestigungsbolzen festgelegten Stützfüßen und einem die Stützfüße miteinander verbindenden Holm. Die Stützfüße sind im allgemeinen als Zinkdruckgußteile ausgebildet.

In der Praxis sowie bei Crash-Versuchen hat sich gezeigt, daß die Kräfte, die bei einem Autounfall oder auch schon bei einer Notbremsung frei werden, nicht vor den bekannten Dachlastenträgersystemen haltmachen. Vielmehr besteht bei allen bisher bekanntgewordenen Dachlastenträgern die Gefahr, daß die Dachlasten bei einem Autounfall zufolge der Bewegungsenergie weggeschleudert werden und erheblichen Schaden anrichten können. Insbesondere hat sich gezeigt, daß auch Teile der Dachlastenträger, wie die Stützfüße, bei einem Auffahrunfall zerbersten können, so daß aus einem Dachlastenträger nebst Dachlast (die zulässige Belastungsgrenze wird häufig - auch beträchtlich - überschritten) im Extremfall ein Geschoß werden kann.

Durch die FR-A-2 288 667 sind zwar Mittel zur Dämpfung (Vernichtung) der kinetischen Energie einer aufgenommenen Last bei einer vorbestimmten Verzögerungskraft bekannt, wobei sich diese Lehre jedoch nicht auf ein mit einem Dachlastenträger der eingangs genannten Art vergleichbares technisches Sachgebiet bezieht und auch nicht ohne weiteres auf Dachlastenträger übertragbar ist. Gemäß der Lehre der FR-A-2 288 667 ist vorgesehen, daß ein Lastkraftwagen mit einem Fahrgestellrahmen unter Zwischenschaltung von Reibplatten eine Ladeplattform trägt. Die Reibplatten sollen eine Relativbewegung im Normalbetrieb verhindern, bei einer vorbestimmten Verzögerungskraft hingegen zulassen.

Der vorliegenden Erfindung liegt nun die Aufgabe zugrunde, einen Dachlastenträger der eingangs genannten Art zur Verfügung zu stellen, der helfen soll weitergehende Unfallfolgen in einfacher und kostengünstiger Weise zu verhindern.
Die Aufgabe ist durch die Merkmale des Anspruchs 1 oder 8 gelöst.

Der Dachlastenträger besteht einerseits aus Stützfüßen, die am Dachblech befestigbar sind und aus Längsholmen oder Querholmen, die wiederum an den Stützfüßen befestigbar sind, wobei jeweils zumindest zwei Stützfüße einen Längsholm oder einen Querholm tragen. Die stoßdämpfenden Mittel sind im Verbindungsbereich zwischen jeweils einem Längsholm und zumindest einem der Stützfüße bzw. zwischen jeweils einem Querholm und den diesen tragenden Stützfüßen angeordnet. Die stoßdämpfenden Mittel sind vorgesehen, um eine Dämpfung (Vernichtung) der kinetischen Energie der Dachlast bei abrupter Fahrzeugabbremsung zu erzielen.

Durch die erfindungsgemäßen Maßnahmen wird erreicht, daß bei einem abrupten Abbremsen eines Fahrzeugs die kinetische Energie der auf dem Autodach befindlichen Zuladung vernichtet, zumindest aber aufgefangen, gedämpft oder umgewandelt wird.

Als stoßdämpfende Mittel können im jeweiligen Verbindungsbereich Deformationskörper, jeweils einen Zylinder und einen Kolben aufweisende Stoßdämpfer oder auch Reibungsbremsen angeordnet sein. Ein Deformationskörper kann aus einem unter einer definierten Kraftbeaufschlagung zusammenbrechenden Material, beispielsweise aus geblasenem Polyäthylen, Acryl-Butadien-Styrol oder dgl. bestehen. Es ist auch möglich, einen Knautschkörper aus einem metallischen Hohlkörper aus streckmetallartig ausgebildetem Gittermaterial oder einem mit einer Wabenstaffelung versehenen Metallfolienmaterial vorzusehen. Durch einen solchen oder gleichartig wirkenden Körper werden hervorragende Energieabsorptionseigenschaften erzielt.

Gemäß einer Ausgestaltung der Erfindung kann vorgesehen sein, daß das als Deformationskörper ausgebildete stoßdämpfende Mittel auf einem an einem Stützfuß befindlichen, einendig durch eine Kreisringfläche begrenzten Steckzapfen angeordnet ist, der auch einen freien Endbereich eines rohrförmigen Längsholms aufnimmt, so daß der Deformationskörper zwischen der Kreisringfläche und dem Stirnende des Längsholms sitzt.

Eine andere Ausführungsform der Erfindung ist dadurch verwirklicht, daß das als Stoßdämpfer ausgebildete stoßdämpfende Mittel mit dem Zylinder in einer Sackbohrung eines Stützfußes und mit dem Kolben in einer Sackbohrung eines durch einen Freiraum vom Stützfuß beabstandeten Längsholms bzw. Querholms angeordnet ist. Dabei sollte, um ein gutes Aussehen des Dachlastenträgers zu gewährleisten, der Freiraum zwischen dem Stützfuß und dem Längsholm durch eine Verblendungsbuchse aus leicht verformbarem Material überbrückt sein.

Gemäß einer weiteren Ausführungsform der Erfindung ist vorgesehen, daß zwecks Bildung der stoßdämpfenden Mittel die Stützfüße mit in die Enden der rohrförmigen Längsholme eingreifenden Steckzapfen ausgebildet sind, die einendig durch Anschläge für die Holmenden bildende Kreisringflächen begrenzt sind, wobei die Kreisringflächen, ebenso wie die Stirnenden der Längsholme konisch gestaltet sind, um eine axiale Bewegung der Längsholme bei abrupter Fahrzeugabbremsung unter energieabsorbierender Verformungsarbeit der Holmendbereiche zu ermöglichen. Diese Maßnahme, die bei großer Effizienz besonders kostengünstig ist, kann dadurch ergänzt werden, daß die Endbereiche der Längsholme durch innenseitige Materialwegnahme (Materialaussparung) eine Wandstärkenreduzierung aufweisen.

Die Erfindung läßt sich mit Vorteil auch dadurch verwirklichen, daß die Stützfüße jeweils zweiteilig ausgebildet sind und aus einem am Fahrzeug verankerten Unterteil und einem daran verschiebbar befestigten Oberteil bestehen, wobei zwischen dem Oberteil und dem Unterteil jeweils eine Reibungsbremse ausgebildet oder angeordnet ist.

Im Hinblick auf die Gefahr von Auffahrunfällen empfiehlt es sich, den Dachlastenträger unabhängig vom jeweiligen Aufbau, sowohl vorderseitig als auch hinterseitig mit Dämpfungsmitteln zum Auffangen kinetischer Energie auszurüsten.

Ausführungsbeispiele der Erfindung werden nachfolgend anhand der Zeichnung näher erläutert. Es zeigen:
- Fig. 1: einen Dachlastenträger, bestehend aus Relings mit Stützfüßen und Längsholmen sowie an den Längsholmen befestigten Querholmen,
- Fig. 2: einen Dachlastenträger, bestehend aus Querholmen und Stützfüßen
- Fig. 3: eine Einzelheit nach Fig. 1 gemäß einer ersten Ausführungsform,
- Fig. 4: eine Einzelheit nach Fig. 1 gemäß einer zweiten Ausführungsform,
- Fig. 5: eine Einzelheit nach Fig. 1 gemäß einer dritten Ausführungsform,
- Fig. 6: eine Einzelheit nach Fig. 1 gemäß einer vierten Ausführungsform und
- Fig. 7: eine Einzelheit nach Fig. 2.

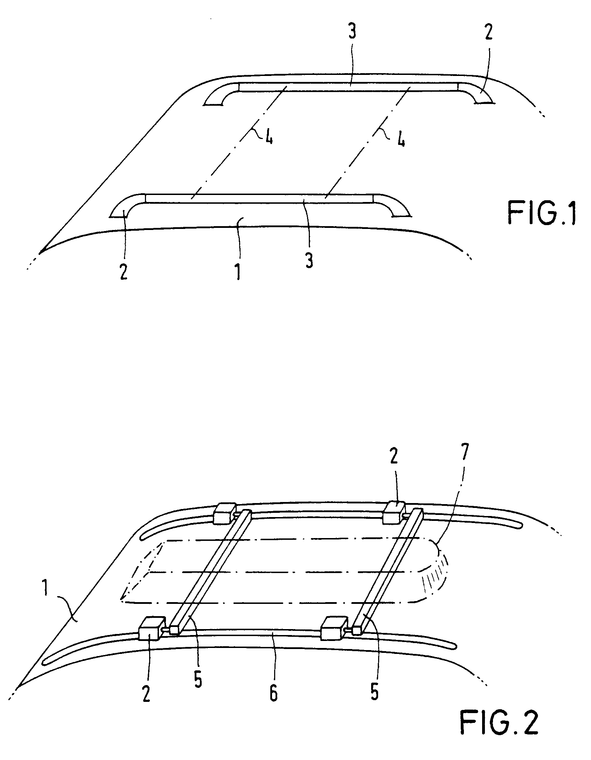

Fig. 1 zeigt das Dachblech 1 eines Fahrzeugs mit einem darauf angeordneten Dachlastenträger. Letzterer wird aus zwei Relings, bestehend aus Stützfüßen 2 und Längsholmen 3 sowie aus lediglich strichpunktiert angedeuteten Querholmen 4, die an den Längsholmen 3 befestigt sind, gebildet. Die Relings erstrecken sich zumindest annähernd parallel zueinander und verlaufen in Fahrtrichtung des Fahrzeugs.

Fig. 2 zeigt einen auf dem Dachblech 1 eines Fahrzeugs angeordneten Dachlastenträger, der aus das Dachblech 1 querenden Querholmen 5 und an deren Enden befindlichen Stützfüßen 2 besteht. Während die Stützfüße 2 beim Ausführungsbeispiel nach Fig. 1 mittels die Dachhaut durchsetzender Befestigungsbolzen an Dachholmen eines Fahrzeuges befestigt sind, was allgemein bekannt und daher nicht näher dargestellt ist, sind die Stützfüße 2 beim Ausführungsbeispiel nach Fig. 2 an der Dachrinne oder in einem Dachkanal 6 in ebenfalls bekannter und daher nicht näher dargestellter Weise befestigt. An den Querholmen 5 ist ein durch strichpunktierte Linien angedeuteter Transportbehälter 7 befestigt.

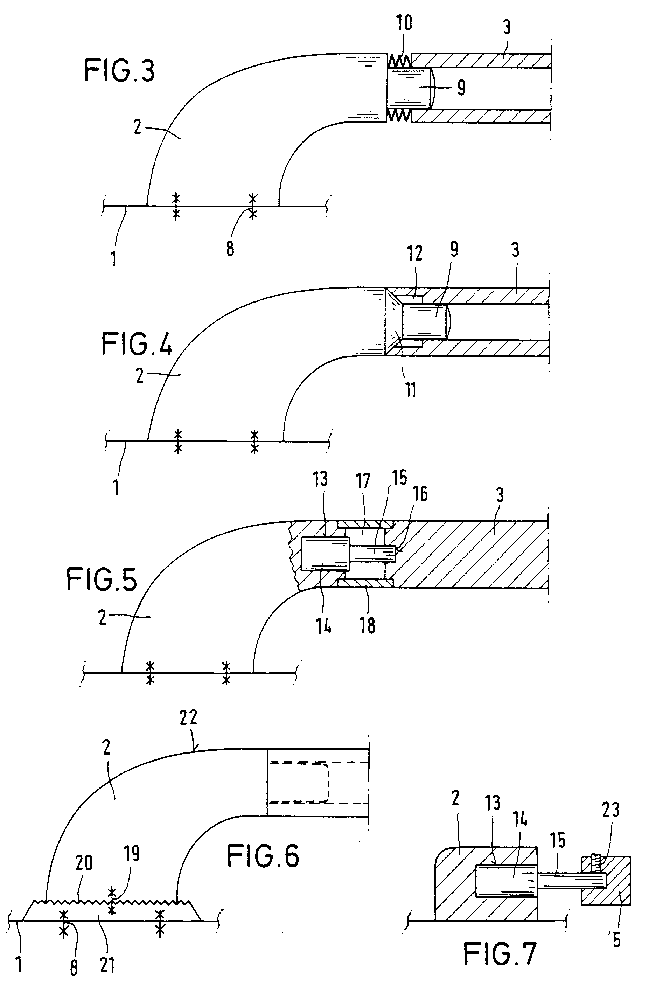

Die Fig. 3 bis 6 zeigen jeweils eine Einzelheit des Ausführungsbeispiels nach Fig. 1 in unterschiedlichen Ausführungsformen. Dabei ist jeweils ein Stützfuß 2 sowie ein mit diesem zusammenwirkender Endbereich eines der Längsholme 3 gezeigt.

Der Stützfuß 2 nach Fig. 3 ist auf dem Dachblech 1 des Fahrzeuges aufsitzend angeordnet und am Fahrzeug durch Befestigungselemente 8 gehalten. Der Stützfuß 2 weist einen Steckzapfen 9 auf, über den zunächst ein Deformationskörper 10 und daran angrenzend ein freies Ende des hier rohrförmig ausgebildeten Längsholms 3 geschoben ist. Zwischen dem nicht gezeigten Stützfuß und dem anderen freien Ende des Längsholms 3 kann bzw. sollte ebenfalls ein Deformationskörper 10 angeordnet sein, damit Rückstoßkräfte aufgefangen werden können.

Fig. 4 zeigt einen auf dem Dachblech 1 sitzenden Stützfuß 2 mit einem Steckzapfen 9, auf den das freie eine Ende des Längsholms 3 aufgeschoben ist. Im Übergangsbereich zwischen Steckzapfen 9 und Stützfußkörper befindet sich eine als Konus ausgebildete Kreisringfläche 11. Das an der Kreisringfläche 11 anliegende freie Ende des Längsholms 3 ist ebenfalls konisch ausgebildet. Der freie Endbereich des Längsholms 3 ist durch eine holminnenseitige Materialaussparung 12 in der Wandstärke reduziert. Es versteht sich, daß das nicht gezeigte zweite Relingende entsprechend gestaltet werden kann bzw. sollte.

Fig. 5 zeigt eine Ausführungsform mit einem Stützfuß 2, der in einer sacklochartigen Bohrung 13 den Zylinder 14 eines Stoßdämpfers aufnimmt. Der Kolben 15 des Stoßdämpfers greift in eine sacklochartige Bohrung 16 des Längsholms 3 ein. Zwischen dem Stützfuß 2 und dem Längsholm 3 ist ein Freiraum 17 ausgebildet, welcher durch eine Verblendungsmuffe 18 überbrückt ist.

In der Ausführungsform nach Fig. 6 ist für den Stützfuß 2 eine zweiteilige Ausbildung, nämlich ein auf dem Dachblech 1 sitzendes Unterteil 21 und ein damit verbundenes Oberteil 22, vorgesehen. Das Unterteil 21 ist durch Befestigungselemente 8 am Fahrzeug und das Oberteil 22 durch Befestigungselemente 19 am Unterteil 21 gehalten. Zwischen Unterteil 21 und Oberteil 22 ist eine Reibungsbremse 20 ausgebildet, die bei Überlast eine Relativbewegung zwischen den Teilen 21 und 22 zuläßt.

Die Reibungsbremse 20 kann durch Aufrauhungen der aneinanderliegenden Flächen von Unter- und Oberteil gebildet sein, aber auch aus einem Reibungsbelag bestehen. Es empfiehlt sich, die Befestigungselemente 19 mit nicht gezeigten, die Teile 21 und 22 aneinanderpressenden Federmitteln zusammenwirken zu lassen.

Fig. 7 zeigt einen der Stützfüße 2 nach Fig. 2 und einen Endbereich der Querholme 5. Im Stützfuß 2 ist der Zylinder 14 eines Stoßdämpfers in einem Sackloch 13 verankert und an dem Kolben 15 des Stoßdämpfers ist der freie Endbereich des Holms 5 befestigt, beispielsweise durch einen Gewindezapfen 23. Es empfiehlt sich, alle vier Stützfüße 2 des in Fig. 2 gezeigten Ausführungsbeispiels entsprechend Fig. 7 mit Stoßdämpfern auszurüsten.

Für den neuen Dachlastenträger können handelsübliche, gegebenenfalls auch einstellbare Stoßdämpfer und Bremsen eingesetzt werden.

## Patentansprüche

1. Dachlastenträger für Kraftfahrzeuge, der aus Stützfüßen (2), die am Dachblech (1) befestigbar sind und aus Längsholmen (3) oder Querholmen (5), die wiederum an den Stützfüßen (2) befestigbar sind, besteht, wobei jeweils zumindest zwei Stützfüße (2) einen Längsholm (3) oder einen Querholm (5) tragen, und wobei stoßdämpfende Mittel im Verbindungsbereich zwischen jeweils einem Längsholm (3) und zumindest einem der Stützfüße (2) bzw. zwischen jeweils einem Querholm (5) und den diesen tragenden Stützfüßen (2) angeordnet sind, um eine Dämpfung (Vernichtung) der kinetischen Energie der Dachlast bei abrupter Fahrzeugabbremsung zu erzielen.

2. Dachlastenträger nach Anspruch 1, dadurch gekennzeichnet, daß als stoßdämpfende Mittel Deformationskörper (10), jeweils einen Zylinder (14) und einen Kolben (15) aufweisende Stoßdämpfer oder Reibungsbremsen (20) im jeweiligen Verbindungsbereich angeordnet sind.

3. Dachlastenträger nach Anspruch 1 oder 2, dadurch gekennzeichnet, daß das als Deformationskörper (10) ausgebildete stoßdämpfende Mittel auf einem an einem Stützfuß (2) befindlichen, einendig durch eine Kreisringfläche (11) begrenzten Steckzapfen (9) angeordnet ist, der auch einen freien Endbereich eines rohrförmigen Längsholms (3) aufnimmt, so daß der Deformationskörper (10) zwischen der Kreisringfläche (11) und dem Stirnende des Längsholms (3) sitzt.

4. Dachlastenträger nach Anspruch 1 oder 2, dadurch gekennzeichnet, daß das als Stoßdämpfer ausgebildete stoßdämpfende Mittel mit dem Zylinder (14) in einer Sackbohrung (13) eines Stützfußes (2) und mit dem Kolben (15) in einer Sackbohrung (16) eines durch einen Freiraum (17) vom Stützfuß (2) beabstandeten Längsholms (3) bzw. Querholms (5) angeordnet ist.

5. Dachlastenträger nach Anspruch 4, dadurch gekennzeichnet, daß der Freiraum (17) zwischen dem Stützfuß (2) und dem Längsholm (3) durch eine Verblendungsbuchse (18) aus leicht verformbarem Material überbrückt ist.

6. Dachlastenträger nach Anspruch 1, dadurch gekennzeichnet, daß zwecks Bildung der stoßdämpfenden Mittel die Stützfüße (2) mit in die Enden der rohrförmigen Längsholme (3) eingreifenden Steckzapfen (9) ausgebildet sind, die einendig durch Anschläge für die Holmenden bildende Kreisringflächen (11) begrenzt sind, wobei die Kreisringflächen (11), ebenso wie die Stirnenden der Längsholme (3) konisch gestaltet sind, um eine axiale Bewegung der Längsholme (3) bei abrupter Fahrzeugabbremsung unter energieabsorbierender Verformungsarbeit der Holmendbereiche zu ermöglichen.

7. Dachlastenträger nach Anspruch 6, dadurch gekennzeichnet, daß die Endbereiche der Längsholme (3) durch innenseitige Materialwegnahme (Materialaussparung 12) eine Wandstärkenreduzierung aufweisen.

8. Dachlastenträger für Kraftfahrzeuge, der aus Stützfüßen (2), die am Dachblech (1) Befestigbar sind und aus Längsholmen (3) oder Querholmen (5), die wiederum an den Stützfüßen (2) befestigbar sind, besteht, wobei die Stützfüße (2) jeweils zweiteilig ausgebildet sind und aus einem am Fahrzeug verankerten Unterteil (21) und einem daran verschiebbar befestigten Oberteil (22) bestehen, wobei zwischen dem Oberteil (22) und dem Unterteil (21) jeweils eine als stoßdämpfendes Mittel dienende Reibungsbremse (20) ausgebildet oder angeordnet ist, um eine Dämpfung (Vernichtung) der kinetischen Energie der Dachlast bei abrupter Fahrzeugabbremsung zu erzielen.

## Claims

1. Roof rack for motor vehicles, comprising supporting feet (2), which can be fastened to the roof panel (1), and longitudinal struts (3) or transverse struts (5), which can in turn be fastened to the supporting feet (2), at least two supporting feet (2) respectively bearing a longitudinal strut (3) or a transverse strut (5) and shock-absorbing means being disposed in the junction region between, respectively, a longitudinal strut (3) and at least one of the supporting feet (2) or between, respectively, a transverse strut (5) and the supporting feet (2) which bear it, so that a damping (annihilation) of the kinetic energy of the roof load can be obtained whenever the vehicle brakes abruptly.

2. Roof rack according to Claim 1, characterized in that, as shock-absorbing means, deformation elements (10), shock absorbers exhibiting respectively a cylinder (14) and a piston (15), or friction brakes (20), are disposed in the respective junction region.

3. Roof rack according to Claim 1 or 2, characterized in that shock-absorbing means configured as deformation elements (10) are disposed on a connecting pin (9), which is located on a supporting foot (2) and is limited at one end by an annular ring face (11) and which also receives a free end region of a tubular longitudinal strut (3), so that the deformation element (10) is seated between the annular ring face (11) and the front end of the longitudinal strut (3).

4. Roof rack according to Claim 1 or 2, characterized in that shock-absorbing means configured as shock absorbers are disposed having the cylinder (14) in a pocket bore (13) of a supporting foot (2) and having the piston (15) in a pocket bore (16) of a longitudinal strut (3) or transverse strut (5) distanced from the supporting foot (2) by a free space (17).

5. Roof rack according to Claim 4, characterized in that the free space (17) is bridged between the supporting foot (2) and the longitudinal strut (3) by a facing bush (18) made from easily deformable material.

6. Roof rack according to Claim 1, characterized in that, for the purpose of creating the shock-absorbing means, the supporting feet (2) are configured having connecting pins (9), which engage in the ends of the tubular longitudinal struts (3) and are limited at one end by stops for annular ring faces (11) forming the strut ends, the annular ring faces (11), like the front ends of the longitudinal struts (3), being conically configured to allow an axial motion of the longitudinal struts (3) whenever the vehicle brakes abruptly, the end regions of the struts undergoing energy-absorbing deformation.

7. Roof rack according to Claim 6, characterized in that the end regions of the longitudinal struts (3) exhibit a reduced wall thickness brought about by material removal on the inner side (material recess 12).

8. Roof rack for motor vehicles, comprising supporting feet (2), which can be fastened to the roof panel (1), and longitudinal struts (3) or transverse struts (5), which can in turn be fastened to the supporting feet (2), the supporting feet (2) being respectively configured in two parts and comprising a bottom part (21), which is anchored to the vehicle, and a top part (22), which is fastened displaceably to the said bottom part, there being respectively configured or disposed between the top part (22) and the bottom part (21) a friction brake (20) serving as shock-absorbing means, so that a damping (annihilation) of the kinetic energy of the roof load can be obtained whenever the vehicle brakes abruptly.

## Revendications

1. Galerie de toit pour véhicules constituée d'une part par des pieds d'appui (2) qui peuvent être fixés sur la tôle (1) du toit et par des longerons (3) ou traverses (5) qui peuvent être à leur tour fixés sur les pieds d'appui (2), deux pieds d'appui (2) au moins supportant une longeron (3) ou une traverse (5), et dans laquelle des moyens amortisseurs sont disposés dans la zone de liaison entre chaque fois un longeron (3) et au moins l'un des pieds d'appui (2) ou entre chaque fois une traverse (5) et les pieds d'appui (2) supportant cette dernière, de manière à produire un amortissement (absorption) de l'énergie cinétique de la charge supportée par le toit lors d'un freinage brusque du véhicule.

2. Galerie de toit selon la revendication 1, caractérisée en ce qu'un corps déformable (10) constituant un moyen amortisseur, un cylindre (14) et un piston (15) servant de moyen amortisseur, ou encore un frein à frottement (20), sont disposés dans chaque zone de liaison.

3. Galerie de toit selon la revendication 1 ou 2, caractérisée en ce que les moyens amortisseurs constitués sous forme d'un corps déformable (10) sont disposés sur un tenon (9) limité à son extrémité par une surface en anneau de cercle (11) et recevant également une zone d'extrémité libre d'un longeron de forme tubulaire (3), le corps déformable (10) étant ainsi situé entre la surface en anneau de cercle (11) et l'extrémité frontale du longeron (3).

4. Galerie de toit selon la revendication 1 ou 2, caractérisée en ce que les moyens amortisseurs constitués sous forme d'un amortisseur sont disposés par leur cylindre (14) dans un alésage borgne (13) d'un pied d'appui (2) et par leur piston (15) dans un alésage borgne (16) d'un longeron (3) ou d'une traverse (5) qui est espacé du pied d'appui (2) par un espace laissé libre (17).

5. Galerie de toit selon la revendication 4, caractérisée en ce que l'espace (17) laissé libre entre le pied d'appui (2) et le longeron (3) est recouvert par une douille de protection (18) en un matériau facilement déformable.

6. Galerie de toit selon la revendication 1, caractérisée en ce que pour constituer les moyens amortisseurs, les pieds d'appui (2) comprennent des tenons (9) qui pénètrent dans les extrémités des longerons de forme tubulaire (3), tenons qui sont limités à une extrémité par des surfaces en anneau de cercle (11) formant des butées pour les extrémités des longerons, les surfaces en anneau de cercle (11) ainsi que les extrémités frontales des longerons (3) étant de forme conique pour permettre un mouvement axial des longerons (3) et un travail de déformation des extrémités des longerons qui absorbe l'énergie dans le cas d'un freinage brusque du véhicule.

7. Galerie de toit selon la revendication 6, caractérisée en ce que les régions d'extrémité des longerons (3) présentent une section de paroi d'épaisseur réduite par enlèvement de matériau à l'intérieur (évidement 12).

8. Galerie de toit pour véhicules automobiles, constituée par des pieds d'appui (2) pouvant être fixés à la tôle (1) du toit et par des longerons (3) ou des traverses (5) pouvant être fixés de leur côté sur les pieds d'appui (2), les pieds d'appui (2) étant constitués chaque fois en deux parties dont la partie inférieure (21) est ancrée dans le véhicule et la partie supérieure (22) est fixée de façon mobile sur la première, un frein à frottement (20) constituant un moyen amortisseur étant monté respectivement dans la partie supérieure (22) et dans la partie inférieure (21) pour déterminer un amortissement (absorption) de l'énergie cinétique de la charge supportée par le toit dans le cas d'un freinage brusque du véhicule.
